# DEMANDE DE BREVET EUROPEEN

(11) **EP 1 502 923 A1**
(43) Date de publication de la demande: **02.02.2005**
(21) Numéro de dépôt: 04300434.0
(22) Date de dépôt: 09.07.2004
(51) Int. Cl.: C08F 8/00, H01B 13/06, C08J 3/22

(54) **Procédé d'extrusion et de réticulation de composition polymérique chargée**

(30) Priorité: 01.08.2003 FR 0309559
(71) Demandeur: Nexans, 75008 Paris (FR)
(72) Inventeur: KENSICHER, Christèle, 69007, LYON (FR); GALLIEN, Valérie, 69006, LYON (FR)
(74) Mandataire: Feray, Valérie

(57) **Abrégé**

La présente invention concerne un procédé d'extrusion et de réticulation d'une composition polymérique chargée comprenant les opérations suivantes :
- un greffage à partir d'un mélange de greffage comprenant :
   - un polymère greffable silane dit de base (A) choisi parmi les polyoléfines et leurs copolymères,
   - un composé silane réactif avec le polymère greffable,
   - un agent générateur de radicaux libres,
- un mélange maître dit de charge (B) comprenant une charge et un polymère greffable silane compatible avec ledit polymère de base,
- l'ajout dudit catalyseur de réticulation pour former la composition polymérique,
- l'extrusion de ladite composition polymérique au moyen d'une extrudeuse (10),
- la réticulation de ladite composition polymérique extrudée.

## Description

La présente invention se rapporte à un procédé d'extrusion et de réticulation de composition polymérique chargée par exemple pour la fabrication de câble ainsi qu'aux compositions adaptées à ce procédé.

Dans le cas d'un court-circuit survenant dans les câbles d'énergie ou composites, des températures atteignant localement 200°C peuvent être observées. A ces températures et sous contrainte, il se produit une déformation ou fluage du matériau. L'évaluation de cet allongement ou fluage à chaud ("hot set test") s'effectue dans les conditions définies dans la norme NF EN 60811-2-1. On cherche des compositions qui présentent de bons résultats au "hot set test".

Pour ce type d'utilisation, on souhaite donc fabriquer des câbles possédant de bonnes propriétés thermomécaniques, et l'on choisit pour cela des matériaux à base de polymères réticulés dans lesquels une structure tridimensionnelle est formée par liaisons covalentes entre les chaînes.

Ce type de composition est particulièrement recherché pour la fabrication de matériau d'isolation de câbles d'énergie (basse moyenne, ou haute tension) ou de câbles composites (télécommunications et énergie) mais plus largement pour la fabrication de matériau de gainage de câbles d'énergie, de télécommunications ou composites.

Pour une simplicité de fabrication et une réduction des coûts, on choisit une composition donnant un matériau réticulé à l'air, et par exemple à base d'un polymère greffé silane. Plus précisément, on emploie une composition polymérique extrudable en continu et réticulable à l'air qui comprend généralement :
- un polyoléfine ou un copolymère de celle-ci tel que le polyéthylène,
- un composé silane,
- un agent générateur de radicaux libres tel que le peroxyde,
- et un catalyseur de réticulation tel que le sel d'étain.

Le peroxyde crée sur le polymère des sites actifs sur lesquels viennent s'accrocher les groupements silane

Selon la technique de fabrication de câbles appelée 'Monosil', le câble est fabriqué en une seule étape. Il est donc exempt de compoundage préalable c'est-à-dire d'élaboration de composition polymérique par exemple dans un mélangeur interne ou continu.

On mélange ainsi directement dans l'extrudeuse le polymère sous forme solide et en granulé et le mélange liquide comprenant le silane et le peroxyde ainsi que le catalyseur de réticulation.

Malheureusement, ce procédés n'est pas utilisable lorsque l'on souhaite ajouter une charge, par exemple du talc ou du carbonate de calcium dans la composition polymérique. En effet, de par son caractère pulvérulent, la charge ajoutée avant greffage compromet ce greffage. Le document JP56163142 propose en relation avec son exemple 2 un procédé de fabrication d'un câble à partir d'une composition polymérique chargée extrudable en continu et réticulable.

Le procédé comprend trois étapes principales: une étape de formation d'une polyoléfine greffée silane, suivie d'une étape d'extrusion du matériau non encore réticulé et d'une étape d'immersion dans de l'eau chauffée pendant 24 h.

Dans l'extrudeuse, le mélange comprend :
- la polyoléfine greffée silane,
- un premier mélange maître à catalyseur de réticulation comprenant un dilaurate de dibutyl étain et un copolymère d'éthylène et propylène,
- un deuxième mélange maître à charge comprenant du talc et un copolymère d'éthylène et propylène, en proportion relative en poids de 66 : 33.

Ainsi, ce document JP56163142 indique que la réalisation préalable du greffage et l'ajout ultérieur d'une charge - qui contient souvent beaucoup d'eau et des sels de métaux - dans un mélange maître évite l'amorçage de la réticulation dans l'extrudeuse et donc les problèmes de filage et de surface rugueuse résultants.

Ce document japonais ne présente pas de résultats de fluage à chaud et ni d'autres tests indicatifs du taux de réticulation.

Or l'ajout ultérieur du mélange maître conduit à l'ajout du polymère non greffé donc à fortiori non réticulable au détriment des performances mécaniques du matériau final.

La présente invention a pour but de proposer un procédé d'extrusion et de réticulation d'une composition polymérique chargée extrudable en continu et réticulable donnant un matériau réticulé ayant de bonnes propriétés thermomécaniques et de préférence compatible avec les exigences industrielles de productivité (simplicité et/ou rapidité et/ou bas coût).

La présente invention vise à fournir d'abord un procédé d'extrusion et de réticulation d'une composition polymérique chargée comprenant les opérations suivantes :
- un greffage à partir d'un mélange de greffage comprenant :
   - un polymère greffable silane dit de base choisi parmi les polyoléfines et leurs copolymères,
   - un composé silane réactif avec le polymère greffable
   - un agent générateur de radicaux libres,
- un mélange maître dit de charge comprenant une charge et un polymère greffable silane compatible avec ledit polymère de base,
- l'ajout dudit catalyseur de réticulation pour former la composition polymérique,
- l'extrusion de ladite composition polymérique au moyen d'une extrudeuse,
- la réticulation de ladite composition polymérique extrudée.

Le procédé selon l'invention ainsi propose l'incorporation du mélange maître de charge selon l'invention avant greffage en garantissant la fabrication de produits chargés et suffisamment réticulés pour obtenir de bonnes propriétés thermomécaniques.

De façon surprenante, la charge dans le mélange maître ne va pas gêner le greffage. En outre, le polymère greffable compatible va aussi être greffé puis réticulé.

L'ajout du catalyseur de réticulation est quant à lui réalisé dans le mélange de greffage ou après ledit greffage au choix.

Dans un premier mode avantageux de réalisation de l'invention, le mélange de greffage est réalisé dans ladite extrudeuse de sorte que ledit procédé comprend une seule extrusion et est exempt de compoundage préalable dudit mélange.

En outre, dans ce mode, le mélange maître de charge est de préférence injecté au moyen d'une trémie d'alimentation distincte de la trémie d'alimentation dudit polymère de base pour ajuster le débit pour chaque matière.

Dans ce premier mode, le catalyseur de réticulation est ajouté dans le mélange de greffage au moyen d'un injecteur de liquide sous pression de ladite extrudeuse.

Toujours, dans ce premier mode, ledit agent générateur de radicaux libres et ledit composé silane sont injectés dans l'extrudeuse simultanément audit catalyseur de réticulation via ledit injecteur.

De préférence, le greffage peut être réalisé dans l'extrudeuse qui comporte un profil de température sensiblement entre 140 et 230°C au niveau de zones de chauffe prévues dans l'extrudeuse.

Dans un deuxième mode de réalisation de l'invention, le catalyseur de réticulation est ajouté sous forme d'un mélange maître à catalyseur comprenant en outre un polymère compatible avec ledit polymère de base, l'ajout dudit mélange maître à catalyseur étant réalisé après le greffage et dans l'extrudeuse, au moyen d'une trémie d'alimentation réservée.

De préférence, ladite charge est perméable à l'humidité pour une réticulation à l'air.

Ainsi, on choisit une charge perméable à l'humidité contrairement au talc de l'art antérieur qui, de par sa structure lamellaire, empêche une réticulation à l'air libre.

En outre l'immersion dans l'eau comme dans l'art antérieur est particulièrement onéreuse et nécessite des infrastructures spécifiques.

L'invention propose également un procédé de fabrication d'un câble comportant une âme conductrice, une isolation et/ou une gaine incluant les étapes dudit procédé tel que défini précédemment pour la fabrication de la gaine et/ou de l'isolation ladite extrusion comprenant un filage de la composition sur l'âme conductrice.

L'invention propose enfin une composition polymérique chargée extrudable en continu et réticulable utilisée dans l'un des procédés précités et dont le mélange maître de charge contient au moins 80% en poids de la charge et jusqu'à 20% en poids du polymère compatible.

L'invention rend possible l'utilisation d'un fort taux de charge par rapport à l'art antérieur sans diminuer malgré la présence de celle-ci le taux de greffage des polymères et donc le taux de réticulation.

De cette façon, on peut aussi mettre davantage de mélange maître, donc de charge.

Avantageusement, le mélange maître de charge peut comprendre du carbonate de calcium et de préférence sensiblement 88% en poids.

Un tel mélange maître (masterbatch en anglais) est disponible sur le marché : il s'agit par exemple du produit Omyalène® de la société Omya.

De préférence, le polymère compatible et le polymère de base sont choisis parmi un polyéthylène, un éthylène acétate de vinyle et leurs mélanges.

Dans un mode de réalisation de l'invention, la composition comprend :
- 100 parts en poids dudit polymère de base,
   - entre 10 et 50 parts en poids dudit mélange maître de charge.

L'invention s'applique naturellement à un câble comportant une isolation et/ou une gaine obtenue(s) à partir de ladite composition polymérique telle que définie précédemment.

L'invention vise particulièrement les câbles (d'énergie, composite voire de télécommunications) et autres accessoires de câbles mais peut aussi bien s'appliquer à tout autre élément cylindrique ou non (tube, jonc, ruban....) qui requiert de bonnes propriétés thermomécaniques.

L'invention sera mieux comprise à l'aide des exemples suivants de compositions et procédés selon l'invention, donnés à titre illustratif et nullement limitatif.

On présente d'abord deux séries de compositions polymériques chargées (ou non) extrudables en continu et réticulables à l'air.

On présente ensuite deux exemples de procédés de fabrication d'un câble le premier en une étape d'extrusion et sans compoundage et à partir de la première série de compositions, le second en une étape de greffage et en une étape ultérieure d'extrusion et à partir de la deuxième série de compositions.

La figure 1 montre schématiquement une extrudeuse utilisée dans le premier procédé de fabrication de câble.

La figure 2 montre schématiquement une extrudeuse utilisée dans le deuxième procédé de fabrication de câble.

### Première série de compositions

Le tableau 1 ci-après présente respectivement la formulation d'une composition polymérique chargée extrudable en continu et réticulable à l'air selon l'invention, ou composition n°1, et d'une composition polymérique étalon non chargée extrudable en continu et réticulable à l'air.

**Tableau 1**

| Formulation | Composition n°1 (parts en poids) | Composition étalon (parts en poids) |
|---|---|---|
| Polyéthylène | 100 | 100 |
| Omyalène® de la société Omya (mélange maître de 88% CaCO₃ et 12% LDPE/ EVA) | 30 | 0 |
| Silfin66® de la société Degussa (88% silane, 6% peroxyde et 6% sel d'étain) | 1,20 | 1,08 |

Le tableau 2 ci-après présente respectivement les propriétés thermomécaniques des compositions n°1 et étalon, après leur mise en oeuvre (greffage dans l'extrudeuse, mise à l'air).

**Tableau 2**

| Propriétés thermomécaniques | Composition n°1 | Composition étalon |
|---|---|---|
| Test de fluage à chaud (HOT SET TEST) | oui (après 4 jours à l'air) | oui |
| Résistance à la rupture (MPa) | 17 | 24 |
| Allongement à la rupture (%) | 614 | 880 |

La résistance et l'allongement à la rupture de ces matériaux sont déterminé par traction à l'aide d'un dynamomètre comme indiqué dans la norme IEC 60811-1-1.

La composition n°1 satisfait au cahier des charges qui impose une résistance à la rupture de 12,5 MPa, un allongement à la rupture de 200% et la réussite du HOT SET TEST. Ainsi, l'Omyalène ne gène ni le greffage ni la réticulation et les propriétés mécaniques sont du même ordre que celle de la composition étalon.

### Deuxième série de compositions

Le tableau 3 ci-après présente respectivement la formulation de trois compositions n°2 à n°4 polymériques chargées extrudables en continu et réticulables à l'air selon l'invention à base de polyéthylène greffé silane en présence de charge.

**Tableau 3**

| Formulation | Composition n°2 (parts en poids) | Composition n°3 (parts en poids) | Composition n°4 (parts en poids) |
|---|---|---|---|
| Polyéthylène greffé silane obtenu à partir de : | | | |
| Polyéthylène | 100 | 100 | 100 |
| Omyalène® | 10 | 20 | 30 |
| Silane | 1,04 | 1,04 | 1,04 |
| Peroxyde | 0,11 | 0,11 | 0,11 |
| Mélange maître de catalyseur à base de DBTL et de PE | 5 | 5 | 5 |

Le LDPE (low density PE) et l'EVA ou éthylène acétate de vinyle vont être greffés silane comme le polyéthylène.

Le polymère du mélange maître de catalyseur n'est pas greffé mais est en trop faible quantité pour détériorer le matériau final.

Le tableau 4 ci-après présente respectivement les propriétés thermomécaniques des compositions n°2 à 4, après leur mise en oeuvre (greffage, extrusion et mise à l'air).

**Tableau 4**

| Propriétés mécaniques | Composition n°2 | Composition n°3 | Composition n°4 |
|---|---|---|---|
| Test de fluage à chaud (HOT SET TEST) | Oui | oui | oui (en 14 jours) |
| Résistance à la rupture (MPa) | 21 | 20 | 15,6 |
| Allongement à la rupture (%) | 594 | 572 | 482 |

Les compositions n°2 à n°4 satisfont au cahier des charges qui impose une résistance à la rupture de 12,5 MPa, un allongement à la rupture de 200% et la réussite du HOT SET TEST. Ainsi, l'Omyalène ne gène pas le greffage et la réticulation ni ne dégrade fortement les propriétés mécaniques.

Une composition polymérique selon l'invention, par exemple les compositions n°1 à n°4, peut être utilisée par exemple pour la fabrication d'un matériau isolant recouvrant l'âme conductrice d'un câble.

### Exemple n°1 de procédé de fabrication d'un câble en une seule étape d'extrusion et sans compoundage

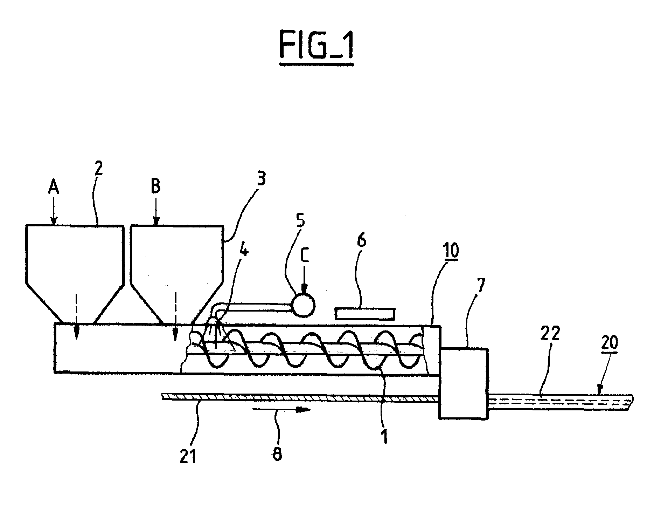

On introduit dans une extrudeuse 10 présentée en figure 1, par exemple mono vis 1, les ingrédients d'une composition selon l'invention à polymère greffable.

Ainsi on introduit :
- le polyéthylène A dans une première trémie d'alimentation 2 en entrée de l'extrudeuse 10, ,
- l'omyalène B, de préférence dans une deuxième trémie d'alimentation 3 en entrée de l'extrudeuse 10, ,
- et le Silfin66 C dans un injecteur de liquide 4 sous pression raccordé à une pompe 5 en entrée de l'extrudeuse 10.

On se place dans les conditions de greffage et l'on choisit notamment un profil en température appropriée grâce à des moyens de chauffage externes 6.

L'extrudeuse 10 est organisée en huit zones successives : l'entrée pour l'alimentation, quatre zones de chauffe successives, le collier, la tête 7 et la filière. Ces zones sont respectivement à 40°C, 175°C, 180°C, 185°C, 190°C, 195°C, 200°C et 230°C.

Un profil de température au niveau des zones de chauffes par exemple entre 120°C et 150°C ne permet pas le greffage.

A titre d'exemple, la vitesse de l'extrudeuse 10 est de 20 tr/min.

L'ensemble des ingrédients A, B, C sont ainsi mélangés et la composition n°1 est transportée par la vis 1 tandis que le greffage s'opère.

A la sortie de l'extrudeuse 10, la vis 1 vient forcer la composition n°1 dans la tête 7 prolongée par la filière (non représentée) dans laquelle une âme conductrice à revêtir 21, par exemple un fil de cuivre, se déplace continûment dans le sens de la flèche 8.

La composition n°1 est extrudée à travers cette filière sur la surface du fil 21 pour former une couche d'isolation 22 d'un câble 20 par exemple d'énergie.

La réticulation de la composition n°1 s'opère à l'air.

Dans une variante, on peut prémélanger le polyéthylène avec l'omyalène avant introduction dans l'extrudeuse via une seule trémie, mais ceci implique une opération supplémentaire.

### Exemple n°2 de procédé de fabrication d'un câble en plusieurs étapes

On prépare un polymère greffé silane A' (étape non représentée) à partir d'un polymère greffable, tel que le polyéthylène, un éthylène acétate de vinyle et leur mélange d'un composé silane et d'un agent générateur de radicaux libres tel que le peroxyde et d'un mélange maître de charge avec un (autre) polymère greffable silane.

Cette étape de greffage peut être réalisée dans une extrudeuse ou tout autre dispositif approprié : rouleaux, malaxeur, mélangeur Banbury et avec chauffage et conditions de cisaillement appropriées.

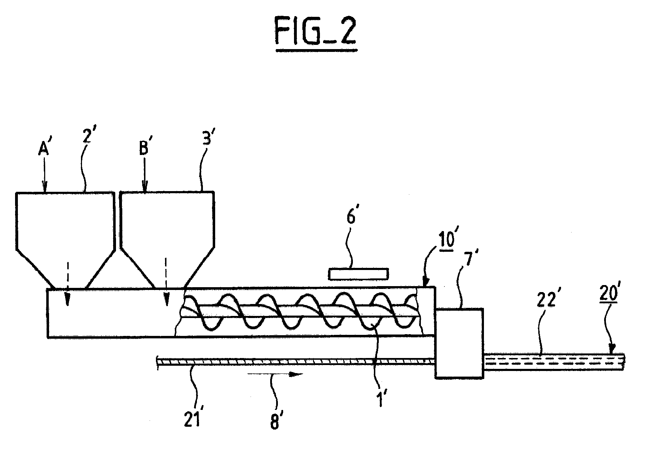

On introduit par exemple dans une extrudeuse 10' montrée en figure 2, les ingrédients d'une composition chargée selon l'invention à polymère greffé silane. Prenons par exemple les ingrédients de la composition n°2, avec une vitesse de la ligne de 3,6 m/min.

Ainsi on introduit :
- le polyéthylène greffé silane A', dans une première trémie d'alimentation 2' en entrée de l'extrudeuse 10',,
- le mélange maître de catalyseur de réticulation B' dans une deuxième trémie d'alimentation 3' en entrée de l'extrudeuse 10',,

On peut choisir un profil en température dans l'extrudeuse 10' grâce à des moyens de chauffage externes 6'.

A titre d'exemple, la vitesse de vis de l'extrudeuse 10' est de 20 tr/min.

A la sortie de l'extrudeuse 10', la vis 1' vient forcer la composition n°2 dans la tête 7' prolongée par la filière (non représentée) dans laquelle une âme conductrice 21' (par exemple un fil de cuivre) à revêtir se déplace continûment dans le sens de la flèche 8'. La composition n°2 est extrudée à travers cette filière sur la surface du fil 21' pour former une couche d'isolation 22' d'un câble 20' par exemple composite.

La réticulation de la composition n°2 s'opère à l'air.

Bien entendu, la description qui précède a été donnée à titre purement illustratif. On pourra sans sortir du cadre de l'invention remplacer tout moyen par un moyen équivalent.

On peut choisir un autre catalyseur de réticulation que le sel d'étain, par exemple le chelate de titane ou l'ester zirconique d'alkyle.

On peut choisir une autre charge perméable à l'humidité que la craie par exemple une charge non traitée acide stéarique.

Le mélange maître de charge selon l'invention peut comprendre 80% ou plus en poids d'une charge perméable à l'humidité, et jusqu'à 20% en poids de polymère compatible avec le polymère greffable.

L'invention s'applique aussi bien pour une gaine de câble de télécommunications et autres produits semi-finis ou finis extrudés, cylindrique ou non, bénéficiant des propriétés mécaniques et de résistance à la chaleur que possède le matériau réticulé obtenu.

## Revendications

1. Procédé d'extrusion et de réticulation d'une composition polymérique chargée comprenant les opérations suivantes :
- un greffage à partir d'un mélange de greffage comprenant :
- un polymère greffable silane dit de base (A) choisi parmi les polyoléfines et leurs copolymères,
- un composé silane réactif avec le polymère greffable,
- un agent générateur de radicaux libres,
- un mélange maître dit de charge (B) comprenant une charge et un polymère greffable silane compatible avec ledit polymère de base,
- l'ajout dudit catalyseur de réticulation pour former la composition polymérique,
- l'extrusion de ladite composition polymérique au moyen d'une extrudeuse (10),
- la réticulation de ladite composition polymérique extrudée.

2. Procédé d'extrusion et de réticulation selon la revendication 1 **caractérisé en ce que** le mélange de greffage est réalisé dans ladite extrudeuse (10) de sorte que ledit procédé comprend une seule extrusion et est exempt de compoundage préalable dudit mélange et **en ce que** le mélange maître de charge (B) est de préférence injecté au moyen d'une trémie d'alimentation (3) distincte de la trémie d'alimentation (2) dudit polymère de base (A).

3. Procédé d'extrusion et de réticulation selon la revendication 2 **caractérisé en ce que** le catalyseur de réticulation est ajouté dans le mélange de greffage au moyen d'un injecteur de liquide sous pression (4) de ladite extrudeuse (10).

4. Procédé d'extrusion et de réticulation selon la revendication 3 **caractérisé en ce que** ledit agent générateur de radicaux libres et ledit composé silane sont injectés dans l'extrudeuse (10) simultanément audit catalyseur de réticulation via ledit injecteur (4).

5. Procédé d'extrusion et de réticulation selon l'une des revendications 1 à 4 **caractérisé en ce que** le greffage est réalisé dans l'extrudeuse (10) qui comporte un profil de température sensiblement entre 140 et 230°C au niveau de zones de chauffe prévues dans l'extrudeuse.

6. Procédé d'extrusion et de réticulation selon la revendication 1 **caractérisé en ce que** le catalyseur est ajouté sous forme d'un mélange maître de catalyseur (B') comprenant en outre un polymère compatible avec ledit polymère de base, l'ajout dudit mélange maître de catalyseur étant réalisé après le greffage et dans l'extrudeuse (10'), au moyen d'une trémie d'alimentation réservée (3').

7. Procédé d'extrusion et de réticulation selon l'une des revendications 1 à 6 **caractérisé en ce que** ladite charge est perméable à l'humidité pour une réticulation à l'air.

8. Procédé de fabrication d'un câble (20, 20') comportant une âme conductrice, une isolation et/ou une gaine incluant les étapes dudit procédé défini selon l'une des revendications 1 à 7, pour la fabrication de la gaine et/ou de l'isolation (22, 22') ladite extrusion comprenant un filage de la composition sur l'âme conductrice (21, 21').

9. Composition polymérique chargée extrudable en continu et réticulable à utilisée dans l'un des procédés selon l'une des revendications 1 à 8 dont le mélange maître de charge (B) contient au moins 80% en poids de la charge et jusqu'à 20% en poids du polymère compatible.

10. Composition polymérique chargée selon la revendication 9 **caractérisée en ce que** le mélange maître de charge (B) comprend du carbonate de calcium et de préférence sensiblement 88% en poids.

11. Composition polymérique selon l'une des revendications 9 ou 10 **caractérisée en ce que** le polymère compatible et le polymère de base (A) sont choisis parmi un polyéthylène, un éthylène acétate de vinyle et leurs mélanges.

12. Composition polymérique selon l'une des revendications 9 ou 10 **caractérisée en ce qu'**elle contient :
- 100 parts en poids dudit polymère de base (A),
- entre 10 et 50 parts en poids dudit mélange maître de charge (B).

13. Câble (20, 20') comportant une isolation (21, 21') et/ou une gaine obtenue(s) à partir de ladite composition polymérique selon l'une des revendications 9 à 12.
